# EUROPÄISCHE PATENTSCHRIFT

(11) **EP 2 885 558 B1**
(45) Veröffentlichungstag und Bekanntmachung des Hinweises auf die Patenterteilung: **08.08.2018**
(21) Anmeldenummer: 13741663.2
(22) Anmeldetag: 17.06.2013
(51) Int. Cl.: F16G 13/12

(54) **GLIEDERKETTE ALS ZUGMITTEL IN STETIGFÖRDERERN UND GEWINNUNGSANLAGEN IM BERGBAU**
LINK CHAIN AS TRACTION MEANS IN CONTINUOUS CONVEYORS AND EXTRACTION SYSTEMS IN MINING
CHAÎNE À MAILLONS UTILISÉE EN TANT QUE MÉCANISME DE TRACTION DANS DES TRANSPORTEURS CONTINUS ET DES INSTALLATIONS DE PRODUCTION DANS L'INDUSTRIE EXTRACTIVE

(30) Priorität: 20.08.2012 DE 102012107592
(43) Veröffentlichungstag der Anmeldung: 24.06.2015
(73) Patentinhaber: Thiele GmbH & Co. KG, 58640 Iserlohn (DE)
(72) Erfinder: KANDZIA, Richard, 44801 Bochum (DE)
(74) Vertreter: Griepenstroh, Jörg
(86) Internationale Anmeldenummer: PCT/DE2013/100218
(87) Internationale Veröffentlichungsnummer: WO 2014/029386

(56) Entgegenhaltungen:
- EP-A1- 2 039 959
- EP-A2- 1 596 096
- DE-A1- 2 841 686
- JP-U- 3 142 447

## Beschreibung

Die Erfindung betrifft eine Gliederkette als Zugmittel in Stetigförderern und Gewinnungsanlagen im Bergbau, insbesondere eine Hobelkette für Kohlenhobelanlagen, gemäß den Merkmalen im Oberbegriff von Anspruch 1.

Gliederketten, insbesondere hochfeste Gliederketten, werden als zugkraftübertragende oder als leistungsübertragende Bauteile eingesetzt. Im Bergbau, insbesondere im untertätigen Steinkohlenbergbau, kommen Gliederketten als Zugmittel in Stetigförderern wie in Kettenkratzerförderern bei der Förderung von Schüttgütern oder in Gewinnungsanlagen als Hobelketten zum Einsatz. Die vorliegende Erfindung bezieht sich insbesondere, aber nicht ausschließlich auf Hobelketten.

Rundstahlketten für Stetigförderer und Gewinnungsanlage im Bergbau sind in der deutschen Norm DIN 22252 normiert.

Gliederketten bestehen aus ösenartigen, beweglich ineinander greifenden Kettengliedern, die je zwei voneinander beabstandete, parallel zueinander verlaufende Kettengliedschenkel aufweisen. Die Kettengliedschenkel sind über Kettengliedbögen verbunden. In einem Kettenstrang greift jeweils ein Vertikalkettenglied mit seinem Kettengliedbogen in die ovale Innenöffnung zwischen den Kettengliedschenkeln und Kettengliedbögen eines folgenden Horizontalkettenglieds ein und es reihen sich wechselweise und unlösbar mehrere Hundert Kettenglieder aneinander. Über so genannte Kettenschlösser werden die Gliederketten zu einem in sich geschlossenen Kettenstrang verbunden.

Mit einer als Hobelkette zum Einsatz gelangenden Gliederkette wird ein Kohlenhobel im Streb hin und her bewegt. Die Hobelkette wird hierbei in Kettenführungskanälen von Hobelführungsschüssen geführt, die üblicherweise an Kettenkratzerförderern montiert sind.

Zum Stand der Technik zählt beispielsweise eine Hobelvorrichtung mit einer Hobelkette gemäß der DE 20 2011 003 248 U1.

Die EP 1 495 239 B1 beschreibt einen Hobelkettenstrang mit Kettenschlossglied. Die vor dem Kettenschlossglied gelegenen Kettenglieder sind hierbei als Kettensonderglieder ausgebildet und weisen an ihren parallelen, zur Längsrichtung des Hobelkettenstrangs verlaufenden Kettenschenkeln verdickte Bereiche auf, um das Kettenschlossglied zu schützen. Hierdurch soll das Kettenschlossglied vor vorzeitigem Verschleiß geschützt werden.

Die Gliederketten unterliegen im betrieblichen Einsatz höchsten Belastungen und damit nicht unerheblichem Verschleiß, insbesondere durch Reibung. Beim Einsatz einer Gliederkette als Hobelkette entstehen Reibrisse durch die Reibung der Kettenschenkel in den Hobelkettenführungen. Durch den Kontakt der Kettengliedschenkel in der Kettenführung bei der Bewegung entsteht Reibung, die neben den damit verbundenen Reibungsverlusten zu einer schnellen lokalen Aufheizung der Randschicht an den Kettenschenkeln führt.

Diese Aufheizung geht teils über die Austenitisierungstemperatur des Werkstoffs hinaus. Bei Stillstand oder Freilauf der Gliederkette folgt auf die Erwärmung eine Abkühlung, die so schnell sein kann, dass sich Reibmartensit bilden kann. Dieser fördert die Ausbildung von so genannten martensitischen Reibrissen und damit eine Schwächung der Gliederkette. Die Reibrisse können zu einem Versagen der Gliederkette in Folge von Ermüdungsbrüchen führen.

Durch die EP 1 596 096 A2 ist eine Anti-Diebstahl-Kette bekannt. Bei dieser Kette sind die Kettengliedschenkel der Kettenglieder von einem äußeren Schalenkörper aus steifem Material umgriffen. Der Schalenkörper soll die Handhabung und den Widerstand gegen Zerstörung der Kettenglieder erhöhen. Solche Anti-Diebstahl-Ketten unterliegen jedoch gänzlich anderen Belastungen als Gliederketten in Stetigförderern und Gewinnungsanlagen im Bergbau.

Die EP 2 039 959 A1 offenbart ein Kettenglied, welches zwei seitliche Schenkel aufweist, die an beiden Enden durch gebogene Endabschnitte aneinander gefügt sind. Das Kettenglied weist ferner ein Endlosband aus Fasermaterial auf, das um den Umfang des Kettenglieds gewickelt ist. Dieses Kettenglied ist aus mehreren Teilen zusammengesetzt, die durch das Endlosband aus Fasermaterial miteinander verspannt sind. Eine aus solchen Kettengliedern zusammengesetzte Kette soll beispielsweise als Abspannkette oder Ankerkette Anwendung finden. Für einen Einsatz als Zugmittel in Stetigförderern und Gewinnungsanlagen im Bergbau mit den hierbei auftretenden, sich aus der Bewegung ergebenen hohen Wechselbelastungen ist die aus der EP 2 039 959 A1 bekannte Kette ungeeignet.

Der Erfindung liegt, ausgehend vom Stand der Technik, die Aufgabe zugrunde, eine Gliederkette als Zugmittel in Stetigförderern und Gewinnungsanlagen im Bergbau, insbesondere Hobelketten für Kohlenhobelanlagen, zu schaffen, die in ihrem Verschleißverhalten verbessert ist und bei der der Ausbildung von martensitischen Reibrissen entgegengewirkt wird.

Die Lösung dieser Aufgabe besteht nach der Erfindung in einer Gliederkette gemäß den Merkmalen von Patentanspruch 1.

Vorteilhafte Ausgestaltungen und Weiterbildungen des grundsätzlichen Erfindungsgedankens sind Gegenstand der abhängigen Ansprüche 2 bis 9.

Erfindungsgemäß ist vorgesehen, dass die Kettengliedschenkel von zumindest jedem zweiten Kettenglied mit einem Verschleißschutzkörper versehen sind, wobei ein Verschleißschutzkörper den Kettengliedschenkel auf dem überwiegenden Teil seines Umfangs umgreift und der Verschleißschutzkörper die äußere Breite des Kettenglieds nicht überragt. Die Verschleißschutzkörper sind so konfiguriert und umgreifen die Kettengliedschenkel dergestalt, dass die Reibung bei der Bewegung der Gliederkette insbesondere in einer Hobelkettenführung zwischen der Bewegungsbahn und dem Verschleißschutzkörper erfolgt. Mithin wird die Reibung vom Kettengliedschenkel weg in den Verschleißschutzkörper verlagert. Ein Direktkontakt der Kettengliedschenkel mit der Hobelkettenführung oder im Kettenrad bzw. der Tasche eines Taschenrades wird durch die Verschleißschutzkörper verhindert, jedenfalls weitestgehend vermindert. Hierdurch wird die Lebensdauer einer Gliederkette verlängert. Insbesondere ist ein Verschleißschutzkörper so konfiguriert, dass die Außenflächen der Kettengliedschenkel wirksam gegen Reibvorgänge geschützt sind. Hierdurch können martensititsche Reibrisse vermieden werden.

Der Verschleißkörper überragt die äußere Breite des Kettenglieds nicht. Gemäß der deutschen Norm DIN 22252 ist äußere Breite das Gesamtaußenmaß eines Kettenglieds. Gemessen wird die äußere Breite neben der Schweißstelle. Gemäß der Erfindung überragt der Verschleißschutz die äußere Breite des Kettenglieds nicht. Der Verschleißschutz ist folglich in seinen Abmessungen gleich oder kleiner der äußeren Breite des Kettenglieds. Hierdurch ist gewährleistet, dass das Kettenglied in seiner Breite nicht vergrößert wird. Die erfindungsgemäß ausgestaltete Kette kann folglich ohne Änderungen an einer zugehörigen Kettenführung eingesetzt werden. Insbesondere kann die Kette in Kombination mit den üblichen Kettenrädern eingesetzt werden. Eine Änderung der Kettenradgeometrie, insbesondere der Kettentaschen oder Kettenzähne, ist nicht notwendig.

Der Verschleißschutz kann bündig mit der äußeren Breite des Kettenglieds abschließen oder ein Stück nach innen zur Mitte des Kettenglieds versetzt. Es ergibt sich hierbei eine Öffnung des Verschleißschutzes am äußeren Umfang des Kettengliedschenkels. Die Öffnung erstreckt sich in Längsrichtung eines Kettengliedschenkels.

Die Erfindung ist für Gliederketten in Form von Rundstahlketten, Flachketten oder auch Kombinationsketten geeignet.

Der bzw. die Verschleißschutzkörper können mit den Kettengliedschenkeln kraftschlüssig und/oder formschlüssig und/oder stoffschlüssig verbunden sein.

Die Verschleißschutzkörper können aus Metall, Kunststoff, Keramik und/oder aus einem Faserverbundwerkstoff bestehen. Die Verschleißschutzkörper können aus kettengleichen Werkstoffen, insbesondere hochfesten Stahlwerkstoffen, bestehen. Insbesondere können die Verschleißschutzkörper aus Stahl zusätzlich vergütet sein.

Des Weiteren können die Verschleißschutzkörper ein- oder mehrteilig aufgebaut sein. Die Herstellung kann mittels formen, schmieden oder auch spritztechnisch erfolgen. Bei mehrteiligen Verschleißschutzkörpern können die einzelnen Bauteile beispielsweise durch Vernieten, Verschrauben, Verkleben, Verschweißen oder Aufspritzen verbunden sein. Auch eine kraft- und/oder formschlüssige Verbindung, beispielsweise eine Druckknopfverbindung, ist möglich.

Besonders vorteilhaft erstreckt sich der Verschleißschutzkörper über die Länge eines Kettengliedschenkels, mithin über die wirksame Gleitfläche an der Außenseite eines Kettengliedschenkels. Die Geometrie des Verschleißschutzkörpers ist so auf das Gettenglied, insbesondere der Kettengliedschenkel, abgestimmt, dass die Kettenglieder beim Umlauf um das Kettenrad problemlos in die Kettenradtaschen ein- und ausgleisen können. Der Umlauf der Gliederkette um das Kettenrad wird durch die Verschleißschutzkörper nicht beeinträchtigt.

Vorteilhaft kann an einem Verschleißschutzkörper ein in den Innenraum des Kettenglieds hineinragender Fortsatz oder eine Verdickung ausgebildet sein. Durch einen Fortsatz oder eine Verdickung kann ein Verklankungsschutz ausgebildet sein. Durch den Verklankungsschutz wird der Innenraum eines Kettenglieds verringert. Auf diese Weise kann einem Verklanken der Kettenglieder untereinander entgegengewirkt werden.

Eine besonders vorteilhafte Ausgestaltung sieht vor, dass die Verschleißschutzkörper eines Kettenglieds durch einen Steg verbunden sind, der sich zwischen den Kettengliedschenkeln erstreckt. Jeder Kettengliedschenkel eines Kettenglieds weist einen Verschleißschutzkörper auf. Die beiden Verschleißschutzkörper sind durch den Steg verbunden. Die beiden Verschleißschutzkörper und der Steg bilden ein Bauteil, welches ein- oder mehrteilig ausgebildet sein kann.

Vorzugsweise sind die beiden Verschleißschutzkörper durch zwei Halbschalen gebildet. Man kann die Halbschalen auch als Schalensegmente bezeichnen. Die Halbschalen sind am Kettengliedschenkel so positioniert und fixiert, dass der erfindungsgemäße Reibungsschutz sichergestellt ist.

Die Halbschalen können Bestandteil eines Doppel-U-Profils sein. Zwei Doppel-U-Profile werden unter Ausbildung der Verschleißschutzkörper miteinander gekoppelt. Hierbei umgreifen die Verschleißschutzkörper jeweils einen Kettengliedschenkel auf dem überwiegenden Teil seines Umfangs. Zwischen den beiden Verschleißschutzkörpern ist ein doppelwandiger Steg ausgebildet. Vorzugsweise sind die beiden Doppel-U-Profile im Bereich des Stegs miteinander gefügt, beispielsweise verschweißt, verclincht, verschraubt, vernietet oder verklebt.

Die Erfindung ist nachfolgend anhand von in den Zeichnungen dargestellten Ausführungsbeispielen näher beschrieben. Es zeigen.
- Figur 1: einen Ausschnitt einer erfindungsgemäßen Gliederkette in perspektivischer Darstellungsweise;
- Figur 2: die Gliederkette gemäß der Figur 1 in einer Seitenansicht;
- Figur 3: einen Schnitt durch die Darstellung der Figur 2 gemäß der Linie A - A mit der Darstellung einer ersten Alternative für einen Verschleißschutz;
- Figur 4: einen Schnitt durch die Darstellung der Figur 2 gemäß der Linie A - A mit der Darstellung einer zweiten Alternative für einen Verschleißschutz;
- Figur 5: einen Ausschnitt aus einer Gliederkette mit einer weiteren Ausführungsform eines erfindungsgemäßen Verschleißschutzes in perspektivischer Darstellungsweise;
- Figur 6: einen Schnitt durch die Darstellung der Figur 5 gemäß der Linie A-A;
- Figur 7: einen technisch schematisierten Vertikalschnitt durch ein Kettenglied einer weiteren Ausführungsform einer erfindungsgemäßen Gliederkette mit der Darstellung einer Montagesituation der Verschleißschutzkörper und
- Figur 8: den Vertikalschnitt durch das Kettenglied entsprechend der Figur 7 nach Positionierung der Verschleißschutzkörper.

In allen Zeichnungen tragen einander entsprechende Bauteile bzw. Bauteilkomponenten die gleichen Bezugszeichen.

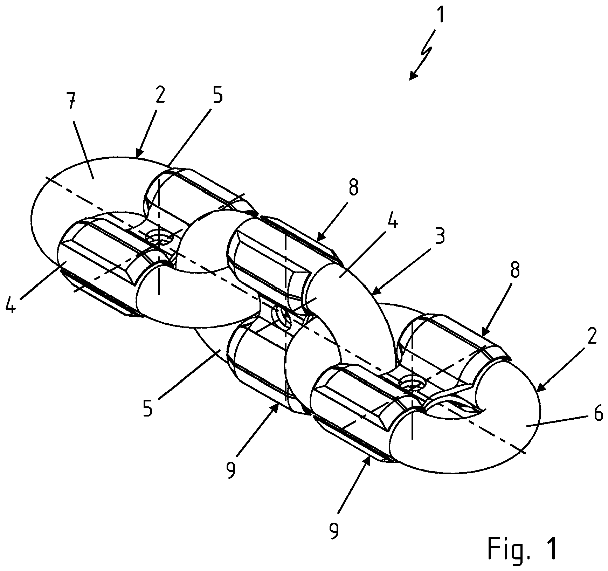

Die Figur 1 zeigt einen Ausschnitt aus einer erfindungsgemäßen Gliederkette 1. Bei der Gliederkette 1 handelt es sich um eine Rundstahlkette. Die Gliederkette 1 ist aus beweglich ineinander greifenden Kettengliedern 2, 3 gebildet. Jedes Kettenglied 2, 3 weist zwei Kettengliedschenkel 4, 5 auf. Die Kettengliedschenkel 4, 5 sind durch Kettengliedbögen 6, 7 verbunden. In der in Figur 1 dargestellten Anordnung und Ausrichtung bilden die Kettenglieder 2 die Horizontalglieder, wohingegen das Kettenglied 3 ein Vertikalkettenglied darstellt.

Jeder Kettengliedschenkel 4, 5 eines Kettenglieds 2, 3 ist mit einem Verschleißschutzkörper 8, 9 versehen. Der Verschleißschutzkörper 8, 9 umgreift den Kettengliedschenkel 4, 5 auf den überwiegenden Teil seines Umfangs U dergestalt, dass ein Direktkontakt der Kettengliedschenkel 4, 5 mit einer Bewegungsbahn, beispielsweise der Innenfläche einer Hobelkettenführung, vermieden wird.

Jeder Verschleißschutzkörper 8, 9 erstreckt sich über die Länge L eines Kettengliedschenkels 4, 5.

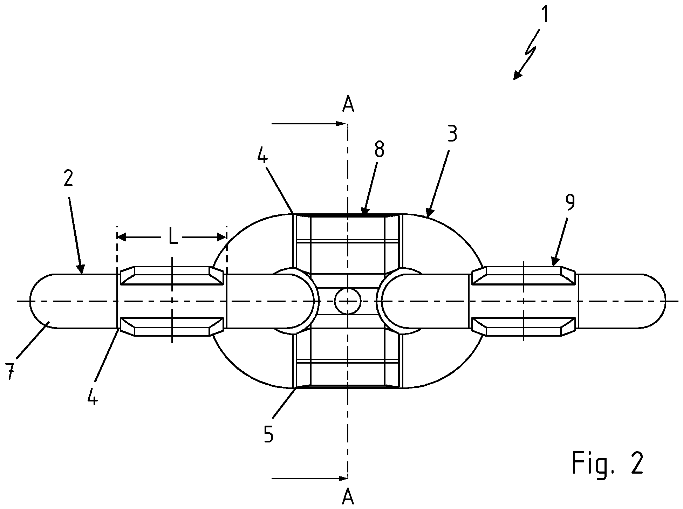

Wie insbesondere auch die Figuren 2, 3 und 4 erkennen lassen, sind die Verschleißschutzkörper 8, 9 durch einen Steg 10 verbunden, der sich zwischen den Kettengliedschenkeln 4, 5 bzw. den beiden jeweils einen Kettengliedschenkel 4, 5 umgreifenden Verschleißschutzkörpern 8, 9 erstreckt.

Die Verschleißschutzkörper 8, 9 sind durch Halbschalen 11, 12 gebildet, die an den Kettenschenkeln 8, 9 anliegen und diese umgreifen.

Bei dem Verschleißschutzkörper 8, 9 in der Ausgestaltung gemäß den Figuren 1 bis 4 sind die Halbschalen 11, 12 jeweils Bestandteil eines Doppel-U-Profils 13, 14. Bei jedem Doppel-U-Profil 13, 14 sind die Halbschalen 11, 12, durch einen Mittelabschnitt 15 verbunden. Die beiden Doppel-U-Profile 13, 14 sind unter Ausbildung der Verschleißschutzkörper 8, 9 miteinander gekoppelt. Hierbei umgreifen die Halbschalen 11, 12 die Kettengliedschenkel 4 bzw. 5. Die beiden Mittelabschnitte 15 der Doppel-U-Profile 13, 14 bilden den doppelwandigen Steg 10. Die Verbindung der beiden Doppel-U-Profile 13, 14 kann kleb- oder schweißtechnisch erfolgen. Möglich ist es auch, die beiden Doppel-U-Profile zu vernieten oder zu verschrauben.

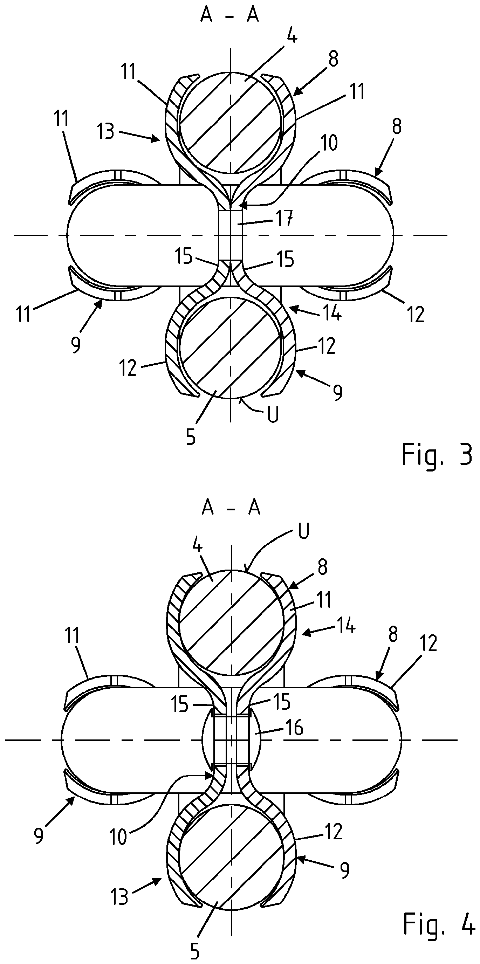

Die Darstellung der Figur 3 zeigt eine stoffschlüssige Verbindung der Doppel-U-Profile 13, 14 durch Schweißen oder Kleben entlang der aneinander liegenden Mittelabschnitte 15.

Die Darstellung gemäß der Figur 4 zeigt eine Ausgestaltung, bei der die Doppel-U-Profile 13, 14 mittels einer Nietverbindung 16 gekoppelt sind. Man erkennt, dass sich die Mittelabschnitte 15 der beiden Doppel-U-Profile 13, 14 mit Abstand zueinander erstrecken.

Man erkennt des Weiteren, dass in den Mittelabschnitten 15 eine Durchgangsöffnung 17 vorgesehen ist. Diese dient zur Aufnahme von Verbindungsmitteln, über welche die Doppel-U-Profile 13, 14 gekoppelt werden.

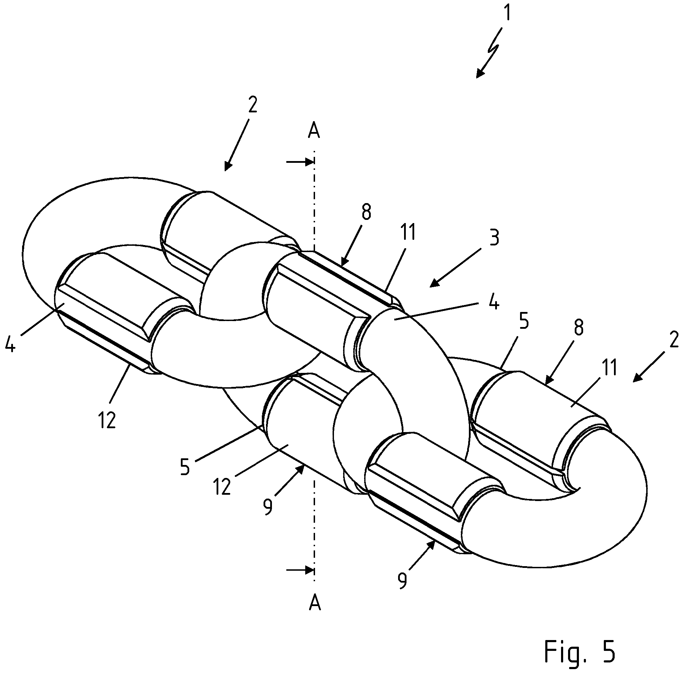

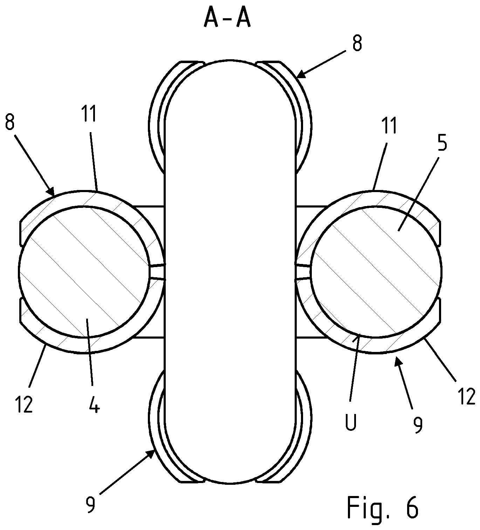

Anhand der Figuren 5 und 6 ist eine zweite Ausführungsform eines Verschleißkörpers 8, 9 für eine Gliederkette 1 erläutert. Der grundsätzliche Aufbau der Gliederkette 1 entspricht der zuvor beschriebenen, so dass auf eine nochmalige Erläuterung verzichtet wird. Jedem Kettengliedschenkel 4, 5 ist ein Verschleißschutzkörper 8, 9 zugeordnet. Die Verschleißschutzkörper 8, 9 sind durch einzelne Halbschalen 11, 12 gebildet, die die Kettengliedschenkel 4, 5 auf dem überwiegenen Teil ihres Umfangs U umgreifen. Hierzu sind die Halbschalen 11, 12 an den Kettengliedschenkeln 4, 5 positioniert und mit diesen gefügt, beispielsweise verschweißt. Die Verschleißschutzkörper 8, 9 erstrecken sich über die Länge L der Kettengliedschenkel 4, 5. Durch die Verschleißschutzkörper 8, 9 wird ein Direktkontakt der Kettengliedschenkel 4, 5 und insbesondere eine Reibung an den äußeren Oberflächen der Kettengliedschenkel 4, 5 bei der Bewegung der Gliederkette 1 in einer Führung vermieden.

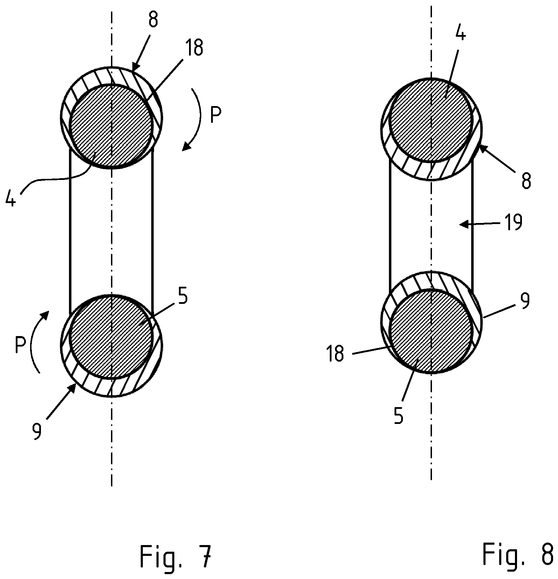

Die Figuren 7 und 8 verdeutlichen eine weitere mögliche Ausgestaltung einer Gliederkette 1, deren Kettengliedschenkel 4, 5 mit Verschleißkörpern 8, 9 versehen sind. Bei den Verschleißschutzkörpern 8, 9 handelt es sich um separate Bauteile, die auf die Kettengliedschenkel 4, 5 angeordnet sind und diese umhüllen. Bei den Verschleißschutzkörpern 8, 9, wie in den Figuren 7 und 8 dargestellt, handelt es sich um einzelne, separte Bauteile nach Art von klammerartigen Federclips. Die Verschleißschutzkörper 8, 9 sind auf die Kettengliedschenkel 4, 5 aufgesetzt. Man erkennt, dass die Verschleißschutzkörper 8, 9 unsymmetrisch gestaltet sind mit einer exzentrisch zum Außenumfang versetzten Innenöffnung 18. Das Aufsetzen der Verschleißschutzkörper 8, 9 kann von außen auf die Kettengliedschenkel 4, 5 erfolgen, wie in der Figur 7 dargestellt. Anschließend werden die Verschleißschutzkörper 8, 9, wie durch die Pfeile P veranschaulicht, nach innen in den Innenraum 19 des Kettenglieds in die Position, wie in der Figur 8 dargestellt, gedreht und dort gegebenenfalls unter Einsatz zusätzlicher Fixierungsmittel, wie Klebstoff, fixiert. Selbstverständlich ist es auch möglich, die Verschleißschutzkörper 8, 9 direkt vom Innenraum 19 eines Kettenglieds auf die Kettengliedschenkel 4, 5 aufzusetzen, wie in der Figur 8 dargestellt.

### Bezugszeichen:

- 1 -: Gliederkette
- 2 -: Kettenglied
- 3 -: Kettenglied
- 4 -: Kettengliedschenkel
- 5 -: Kettengliedschenkel
- 6 -: Kettengliedbogen
- 7 -: Kettengliedbogen
- 8 -: Verschleißschutzkörper
- 9 -: Verschleißschutzkörper
- 10 -: Steg
- 11 -: Halbschale
- 12 -: Halbschale
- 13 -: Doppel-U-Profil
- 14 -: Doppel-U-Profil
- 15 -: Mittelabschnitt
- 16 -: Nietverbindung
- 17 -: Durchgangsöffnung
- 18 -: Innenöffnung
- 19 -: Innenraum

- b₂ -: äußere Breite v. 2, 3
- L -: Länge von 4, 5
- U -: Umfang
- P -: Pfeil

## Patentansprüche

1. Gliederkette als Zugmittel in Stetigförderern und Gewinnungsanlagen im Bergbau, insbesondere Hobelkette für Kohlenhobelanlagen, welche aus beweglich ineinandergreifenden Kettengliedern (2, 3) gebildet ist, wobei jedes Kettenglied (2, 3) aus Stahl besteht und zwei Kettengliedschenkel (4, 5) und die Kettengliedschenkel (4, 5) verbindende Kettengliedbögen (6, 7) aufweist, wobei jeder Kettengliedschenkel (4, 5) von zumindest jedem zweiten Kettenglied (2, 3) mit einem Verschleißschutzkörper (8, 9) versehen ist, wobei der Verschleißschutzkörper (8, 9) den Kettengliedschenkel (4, 5) auf dem überwiegenden Teil seines Umfangs (U) umgreift und der Verschleißschutzkörper (8, 9) die äußere Breite (b₂) des Kettenglieds (2, 3) nicht überragt.

2. Gliederkette nach Anspruch 1, **dadurch gekennzeichnet, dass** der Verschleißschutzkörper (8, 9) mit dem Kettengliedschenkel (4, 5) kraftschlüssig und/oder formschlüssig und/oder stoffschlüssig verbunden ist.

3. Gliederkette nach Anspruch 1 oder 2, **dadurch gekennzeichnet, dass** der Verschleißschutzkörper (8, 9) aus Metall, Kunststoff, Keramik und/oder aus einem Faserverbundwerkstoff besteht.

4. Gliederkette nach wenigstens einem der Ansprüche 1 bis 3, **dadurch gekennzeichnet, dass** sich der Verschleißschutzkörper (8, 9) über die Länge (L) des Kettengliedschenkels (4, 5) erstreckt.

5. Gliederkette nach wenigstens einem der Ansprüche 1 bis 4, **dadurch gekennzeichnet, dass** an einem Verschleißschutzkörper ein in den Innenraum des Kettenglieds hineinragender Fortsatz oder eine Verdickung ausgebildet ist.

6. Gliederkette nach wenigstens einem der Ansprüche 1 bis 5, **dadurch gekennzeichnet, dass** die Verschleißschutzkörper (8, 9) eines Kettenglieds (2,3) durch einen Steg (10) verbunden sind, der sich zwischen den Kettengliedschenkeln (4, 5) erstreckt.

7. Gliederkette nach wenigstens einem der Ansprüche 1 bis 6, **dadurch gekennzeichnet, dass** der Verschleißschutzkörper (8, 9) durch zwei Halbschalen (11, 12) gebildet ist.

8. Gliederkette nach Anspruch 7, **dadurch gekennzeichne**t, dass die Halbschalen (11, 12) Bestandteil eines Doppel-U-Profils (13, 14) sind.

9. Gliederkette nach Anspruch 8, **dadurch gekennzeichnet, dass** zwei Doppel-U-Profile (13, 14) unter Ausbildung der Verschleißschutzkörper (8, 9) miteinander gekoppelt sind.

## Claims

1. Link chain as traction means in continuous conveyors and extraction systems in mining, in particular plough chain for coal plough systems, which is formed from movably interlocking chain links (2, 3), wherein each chain link (2, 3) consists of steel and has two chain link legs (4, 5) and chain link arcs (6, 7) connecting the chain link legs (4, 5), wherein each chain link leg (4, 5) of at least every second chain link (2, 3) is provided with a wear protection body (8, 9), wherein the wear protection body (8, 9) surrounds the chain link leg (4, 5) on the predominant part of its circumference (U) and the wear protection body (8, 9) does not project beyond the outer width (b₂) of the chain link (2, 3).

2. Link chain according to claim 1, **characterised in that** the wear protection body (8, 9) is connected to the chain link leg (4, 5) in a force-locking and/or form-fitting and/or materially bonded manner.

3. Link chain according to claim 1 or 2, **characterised in that** the wear protection body (8, 9) consists of metal, plastic, ceramic and/or of a fibre composite material.

4. Link chain according to at least one of claims 1 to 3, **characterised in that** the wear protection body (8, 9) extends over the length (L) of the chain link leg (4, 5).

5. Link chain according to at least one of claims 1 to 4, **characterised in that** an extension or a thickening projecting into the interior of the chain link is formed on a wear protection body.

6. Link chain according to at least one of claims 1 to 5, **characterised in that** the wear protection bodies (8, 9) of a chain link (2, 3) are connected by a web (10) which extends between the chain link legs (4, 5).

7. Link chain according to at least one of claims 1 to 6, **characterised in that** the wear protection body (8, 9) is formed by two half-shells (11, 12).

8. Link chain according to claim 7, **characterised in that** the half-shells (11, 12) are part of a double U-profile (13, 14).

9. Link chain according to claim 8, **characterised in that** two double U-profiles (13, 14) are coupled together to form the wear protection bodies (8, 9).

## Revendications

1. Chaîne à maillons en tant que moyen de traction dans des transporteurs continus et installations de production dans l'industrie minière, en particulier chaîne de rabot pour des installations de rabot à charbon, qui est formée de maillons de chaîne (2, 3) venant en prise l'un dans l'autre de manière mobile, dans laquelle chaque maillon de chaîne (2, 3) se compose d'acier et présente deux branches de maillon de chaîne (4, 5) et des arcs de maillon de chaîne (6, 7) raccordant les branches de maillon de chaîne (4, 5), dans laquelle chaque branche de maillon de chaîne (4, 5) d'au moins chaque second maillon de chaîne (2, 3) est pourvue d'un corps de protection d'usure (8, 9), dans laquelle le corps de protection d'usure (8, 9) entoure la branche de maillon de chaîne (4, 5) sur la plus grande partie de sa périphérie (U) et le corps de protection d'usure (8, 9) ne dépasse pas la largeur extérieure (b₂) du maillon de chaîne (2, 3).

2. Chaîne à maillons selon la revendication 1, **caractérisée en ce que** le corps de protection d'usure (8, 9) est raccordé à la branche de maillon de chaîne (4, 5) à force, et/ou par complémentarité de formes et/ou de matière.

3. Chaîne à maillons selon la revendication 1 ou 2, **caractérisée en ce que** le corps de protection d'usure (8, 9) se compose de métal, de matière plastique, de céramique et/ou d'un matériau composite renforcé aux fibres.

4. Chaîne à maillons selon au moins l'une quelconque des revendications 1 à 3, **caractérisée en ce que** le corps de protection d'usure (8, 9) s'étend sur la longueur (L) de la branche de maillon de chaîne (4, 5).

5. Chaîne à maillons selon au moins l'une quelconque des revendications 1 à 4, **caractérisée en ce qu'**un prolongement ou un épaississement pénétrant dans l'espace intérieur du maillon de chaîne est réalisé sur le corps de protection d'usure.

6. Chaîne à maillons selon au moins l'une quelconque des revendications 1 à 5, **caractérisée en ce que** les corps de protection d'usure (8, 9) d'un maillon de chaîne (2, 3) sont raccordés par une nervure (10) qui s'étend entre les branches de maillon de chaîne (4, 5).

7. Chaîne à maillons selon au moins l'une quelconque des revendications 1 à 6, **caractérisée en ce que** le corps de protection d'usure (8, 9) est formé par deux demi-coques (11, 12).

8. Chaîne à maillons selon la revendication 7, **caractérisée en ce que** les demi-coques (11, 12) font partie d'un double profilé en U (13, 14).

9. Chaîne à maillons selon la revendication 8, **caractérisée en ce que** deux doubles profilés en U (13, 14) sont accouplés l'un à l'autre par réalisation des corps de protection d'usure (8, 9).
